# EUROPEAN PATENT APPLICATION

(11) **EP 1 467 519 A1**
(43) Date of publication of application: **13.10.2004**
(21) Application number: 02806399.8
(22) Date of filing: 10.01.2002
(51) Int. Cl.: H04L 12/28

(54) **SHORT DISTANCE WIRELESS COMMUNICATION SYSTEM USING MOBILE TERMINAL AND WIRELESS COMMUNICATION DEVICE THEREFOR**

(71) Applicant: FUJITSU LIMITED, Kawasaki-shi, Kanagawa 211-8588 (JP)
(72) Inventor: IDANI, Shigehiro, FUJITSU LIMITED, Kawasaki-shi, Kanagawa 2 11-8588 (JP); NINOMIYA, Teruhisa, FUJITSU LIMITED, Kawasaki-shi, Kanagawa 211-8588 (JP); NAKASHIMA, Yoshiyasu, FUJITSU LIMITED, Kawasaki-shi, Kanagawa 211-8588 (JP); YAMADA, Isamu, FUJITSU LIMITED, Kawasaki-shi, Kanagawa 211-8588 (JP)
(74) Representative: Hitching, Peter Matthew
(86) International application number: PCT/JP2002/000109
(87) International publication number: WO 2003/061205

(57) **Abstract**

A wireless communication device (2), which is connected to a server (4) for providing information via a network (3) and is disposed at an access point for relaying information provision service by the server (4) to a portable terminal (1) having a short distance wireless communication function, includes a network interface (26) for connecting to the network (3), a wireless communication interface (21) for the short distance wireless communication with the portable terminal (1), a connection information exchange portion (25) for exchanging connection information for communication establishment with the portable terminal (1) prior to the short distance wireless communication with the portable terminal (1), and a wireless communication management portion (24) for controlling the exchange process of the connection information by the connection information exchange portion (25) and the communication establishment process with the portable terminal (1).

## Description

### TECHNICAL FIELD

The present invention relates to a short distance wireless communication system that utilizes portable terminals and a wireless communication device for the system. More specifically, the present invention relate to means for saving work of setting parameters in establishment of short distance wireless communication between a portable terminal and a wireless communication device.

### BACKGROUND ART

Recently, a portable terminal such as a cellular phone or a personal digital assistant (PDA) having a short distance wireless communication function that is conformable to a standard of "Bluetooth" or a wireless LAN (for example, IEEE802.11b) has been commercialized, and various services have become available utilizing such a portable terminal.

For example, an information provision service on an event floor or in a department store or other places is under studying, in which information about exhibits or merchandise is transmitted from an access point that is installed in the event floor or the store by using short distance wireless communication. Utilizing this service, a user of a portable terminal who is a customer can receive the information provision service concerning floor guidance or information about exhibits or merchandise using a carrying portable terminal. Thus, the user can easily access a target exhibits or merchandise in the event floor or the store. Alternatively, the user can download detail information about a concerned exhibit or merchandise to his or her portable terminal and/or print out the information.

In a communication protocol using the above-mentioned "Bluetooth" or a wireless LAN for the short distance wireless communication, it is necessary to set various communication parameters for establishing the communication. Conventionally, a user of the portable terminal is required to set such parameters manually.

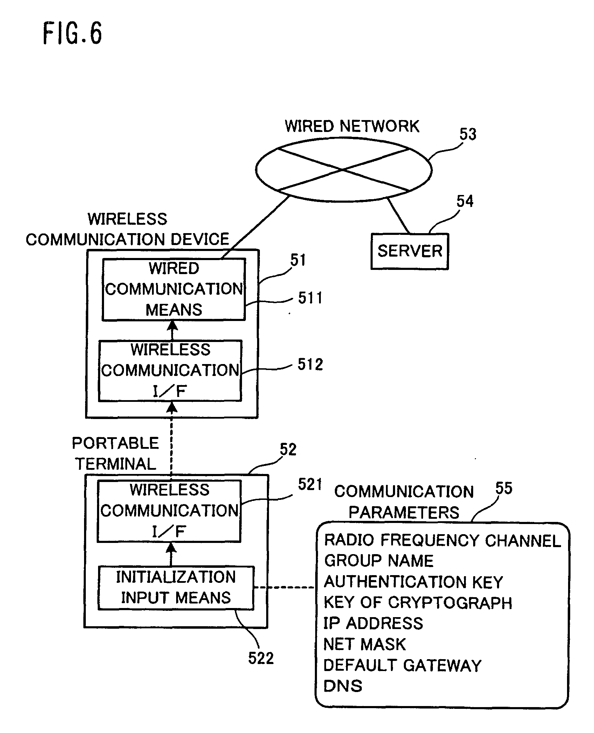

Fig. 6 is a block diagram showing an example of a conventional short distance wireless communication system that utilizes portable terminals. In this example, a wireless communication device 51 that is a communication relay device installed at an access point is connected to a server 54 by wired communication means 511 via a cable network 53. In addition, a wireless communication interface 512 for communication with a portable terminal 52 is provided. The portable terminal 52 also has a wireless communication interface 521 so as to access a server 54 on the network 53 by short distance wireless communication with the wireless communication device 51.

In order to connect to the wireless communication device 51 by the short distance wireless communication, the portable terminal 52 is required to follow the steps below. First, it obtains a communication protocol that is used on the network 53 from a network administrator. For example, if the protocol that is used on the network 53 is TCP/IP, an IP. address that is used by the portable terminal 52, a net mask, a default gateway and the DNS must be set. Furthermore, it is necessary to set a radio frequency channel that is used by the portable terminal 52 for connecting to the wireless communication device 51 by the short distance wireless communication, a group name, an authentication key and a key of cryptograph. The user has to set these communication parameters 55 manually using initialization input means 522 including a keypad that is equipped in the portable terminal 52 or the like.

In this way, the conventional short distance wireless communication system that uses portable terminals has a problem that a lot of labor and time are necessary for setting communication parameters of the portable terminal prior to perform short distance wireless communication with the wireless communication device at the access point. In the above-mentioned example, if the user of the portable terminal who came to the event floor or the department store want to receive an information provision service from the server by connecting his or her portable terminal to the wireless communication device at the access point, he or she has to set predetermined communication parameters in his or her portable terminal. Thus, a lot of users have to spend time and labor for the setting.

An object of the present invention is to enable save of setting parameters for short distance wireless communication in a short distance wireless communication system that utilizes portable terminals.

### DISCLOSURE OF THE INVENTION

A short distance wireless communication system according to the present invention includes a wireless communication device for relaying communication that is connected to a server for providing information via a network, and a portable terminal that can connect to the wireless communication device by short distance wireless communication for receiving information provided by the server. The wireless communication device includes a network interface for connecting to the network, a wireless communication interface for the short distance wireless communication with the portable terminal, a connection information exchange portion for exchanging connection information for communication establishment with the portable terminal prior to the short distance wireless communication with the portable terminal, and a wireless communication management portion for controlling the exchange process of the connection information by the connection information exchange portion and the communication establishment process with the portable terminal in accordance with the connection information. The portable terminal includes a wireless communication interface for performing the short distance wireless communication with the wireless communication device, a connection information exchange portion for exchanging the connection information for the communication establishment with the wireless communication device prior to the short distance wireless communication with the wireless communication device, and a wireless communication management portion for controlling the exchange process of the connection information by the connection information exchange portion and the communication establishment process with the wireless communication device in accordance with the connection information.

The above-mentioned exchange of the connection information may be in the form where the connection information is transmitted and received bidirectionally between the wireless communication device and the portable terminal, or in the form where the connection information is transmitted and received in one direction from the wireless communication device to the portable terminal.

In addition, it is preferable that the connection information exchange portion of the wireless communication device and the connection information exchange portion of the portable terminal have connection terminals that contact each other, and the connection information is transmitted and received by the contact between the connection terminals. Alternatively, the structure may be possible in which the connection information exchange portion of the wireless communication device and the connection information exchange portion of the portable terminal perform transmission and reception of the connection information by non-contact information transmission means like wireless communication, optical communication and optical reading. It is preferable that the non-contact information transmission means have a directivity.

It is preferable that the connection information includes at least one of server information including DNS and a gateway, service information including a printer address, a mail address and a web address and cryptographic information. In addition, it is also preferable that the connection information includes date information that indicates an expiration date of the connection information.

A wireless communication device according to the present invention, which is connected to a server for providing information via a network and is disposed at an access point for relaying an information provision service by the server to. a portable terminal having a short distance wireless communication function, includes a network interface for connecting to the network, a wireless communication interface for the short distance wireless communication with the portable terminal, a connection information exchange portion for exchanging connection information for communication establishment with the portable terminal prior to the short distance wireless communication with the portable terminal, and a wireless communication management portion for controlling the exchange process of the connection information by the connection information exchange portion and the communication establishment process with the portable terminal in accordance with the connection information.

Preferably, the connection information exchange portion has a connection terminal for electric connection with the portable terminal, and transmission and reception of the connection information is performed by the connection terminal. Alternatively, the connection information exchange portion performs transmission and reception of the connection information by non-contact information transmission means like wireless communication, optical communication and optical reading. It is preferable that the non-contact information transmission means have a directivity.

In addition, the wireless communication device preferably transmits the connection information to the portable terminal via the connection information exchange portion prior to the short distance wireless communication with the portable terminal, where the connection information includes at least one of server information including DNS and a gateway, service information including a printer address, a mail address and a web address and cryptographic information.

Furthermore, it is preferable that the wireless communication device receives the connection information including information for specifying the portable terminal and a connection protocol via the connection information exchange portion prior to the short distance wireless communication with the portable terminal.

### BRIEF DESCRIPTION OF THE DRAWINGS

Fig. 1 is a block diagram showing an example of a short distance wireless communication system that utilizes portable terminals according to an embodiment of the present invention.
Fig. 2 is a block diagram showing a first example by extracting a main part of the short distance wireless communication system shown in Fig. 1.
Fig. 3 is an explanatory diagram of the first example about transmission and reception of information between a portable terminal and a wireless communication device.
Fig. 4 is a block diagram showing a second example by extracting a main part of the short distance wireless communication system shown in Fig. 1.
Fig. 5 is an explanatory diagram of the second example about transmission and reception of information between a portable terminal and a wireless communication device.
Fig. 6 is a block diagram showing an example of the conventional short distance wireless communication system that utilizes portable terminals.

### BEST MODE FOR CARRYING OUT THE INVENTION

The present invention will be described in more detail with reference to the attached drawings.

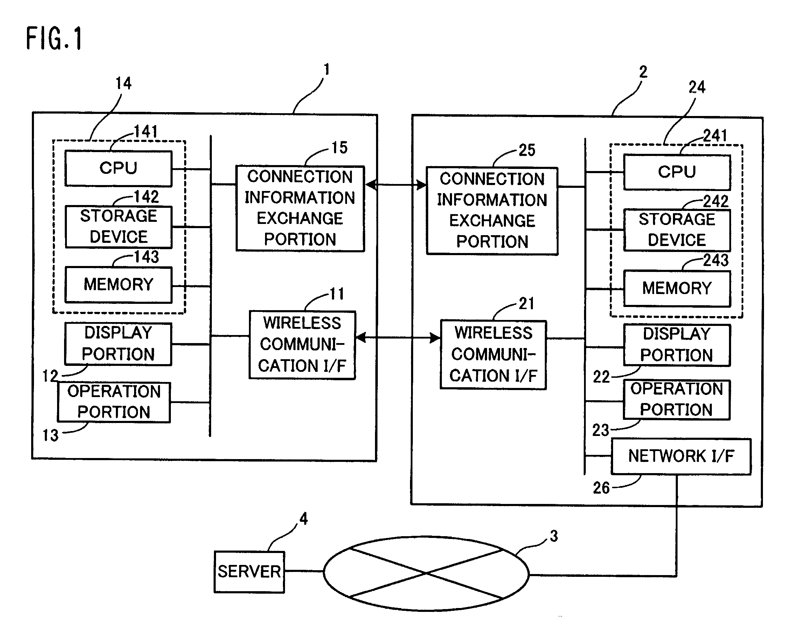

Fig. 1 is a block diagram showing an example of a short distance wireless communication system that utilizes portable terminals according to an embodiment of the present invention. In this example, a wireless communication device 2 is installed at an access point on a event floor so as to perform short distance wireless communication with a portable terminal 1, and a server 4 for information provision and the wireless communication device 2 are connected to each other via a network 3. One or more wireless communication devices 2 may be installed on the event floor. For example, if the event floor includes a plurality of exhibition rooms or booths, the access point may be located for each of the exhibition rooms or booths, and at least one wireless communication device 2 may be installed at each of the access points.

A person who visits the event floor can use his or her carrying portable terminal 1 for performing short distance wireless communication with the wireless communication device 2 that is installed at the access point by a protocol that is conformable to a standard of "Bluetooth" or a wireless LAN (for example, IEEE802.11b), so as to obtain information about the exhibition floor guidance or exhibits from the server 4 on the network 3.

The portable terminal 1 is an information terminal device such as a cellular phone or a personal digital assistant (PDA) having a wireless communication interface 11 for short distance wireless communication that is conformable to a standard of "Bluetooth" or a wireless LAN. The wireless communication interface 11 can be a cellular phone interface such as a personal digital cellular (PDC) or a code division multiple access (CDMA). The portable terminal 1 includes a display portion 12 such as a liquid crystal display, an operation portion 13 including a keypad or the like, a wireless communication management portion 14 and a connection information exchange portion 15 adding to the wireless communication interface 11.

The wireless communication management portion 14 includes a processor (CPU) 141 for controlling exchange of connection information via the connection information exchange portion 15 or a communication establishment process via the wireless communication interface 11, a memory 143 for storing the connection information temporarily and a storage device 142 for storing the connection information durably.

The connection information exchange portion 15 is communication means for performing exchange of connection information such as communication parameters and the like with the wireless communication device 2 prior to the short distance wireless communication, and it can use various connection methods. For example, it can use one of electric connection via connection terminals, a wired connection via a cable (such as USB, IEEE1394 or a parallel connection), or a non-contact method using infrared communication (for example, an IrDA format) or radio frequency communication (second short distance wireless communication). The display portion 12 and the operation portion 13 can be also used for a display of the connection information and for operation of the connection information exchange.

The wireless communication device 2 that is installed at the access point also includes a wireless communication interface 21, a display portion 22, an operation portion 23, a wireless communication management portion 24 and a connection information exchange portion 25 in the same way as the portable terminal 1. The wireless communication management portion 24 includes a processor (CPU) 241 for controlling exchange of the connection information or the communication establishment process, a memory 243 for storing the connection information temporarily and a storage device 242 for storing the connection information durably.

As the wireless communication interface 21, "Bluetooth", a wireless LAN or a cellular phone interface is adopted in the same way as the wireless communication interface 11 of the portable terminal 1. The connection information exchange portion 25 is also adapted to a connection terminal method, a cable connection method or a non-contact method in the same way as the connection information exchange portion 15 of the portable terminal 1. The wireless communication device 2 further includes a network interface 26 for connection to the network to which the server 4 for information provision is connected.

If the connection information exchange portion 15 of the portable terminal 1 and the connection information exchange portion 25 of the wireless communication device 2 perform exchange of the connection information with each other by a contact method or the cable connection method, it is easy to eliminate interference and influence of noise. If the non-contact method is adopted, it is preferable that the connection information exchange portions 15 and 25 have directivities so as to eliminate interference and influence of noise. For example, it is easy to narrow the directivity of infrared communication. If the radio frequency communication (the second short distance wireless communication) is adopted, the directivity can be improved by devising a shape and the like of the antenna.

Next, a detailed explanation about the connection information that is exchanged between the portable terminal 1 and the wireless communication device 2 will be described. The connection information that is sent from the wireless communication device 2 to the portable terminal 1 includes at least one of server information including a DNS and a gateway, service information including a printer address, a mail address and a web address, and cryptographic information (key information). It can also include a device ID of the wireless communication device, a password for user authentication, meta information about information to be provided by the server 4, and the like. Furthermore, the connection information can also include date information indicating an expiration date of the connection information. Thus, it is possible to allow the connection only during a period while the event is held or on a special day during the period.

In addition, the connection information that is sent from the portable terminal 1 to the wireless communication device 2 includes an I/O address of the portable terminal (a MAC address, a "Bluetooth" address) and a connection protocol. It can also include a password for user authentication.

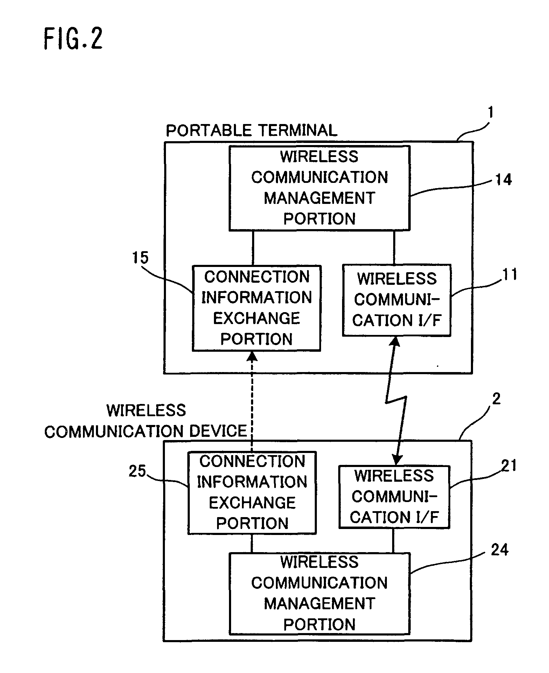

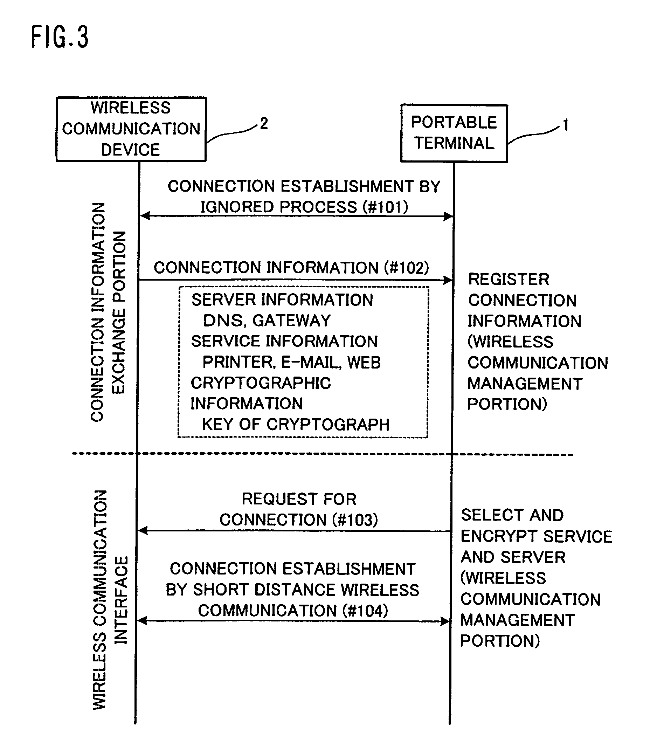

It is not always necessary to perform the exchange of the connection information bidirectionally but at least the above-mentioned connection information is sent from the wireless communication device 2 to the portable terminal 1. First, an example where the exchange of the connection information is performed in only one direction from the wireless communication device 2 to the portable terminal 1 will be descrived with reference to Figs. 2 and 3.

Fig. 2 is a block diagram showing a first example by extracting a main part of the short distance wireless communication system shown in Fig. 1. Fig. 3 is an explanatory diagram of the first example about transmission and reception of Information between the portable terminal and the wireless communication device.

As shown by a broken line with an arrow in Fig. 2, the connection information is transmitted and received from the connection information exchange portion 25 of the wireless communication device 2 to the connection information exchange portion 15 of the portable terminal 1 in one direction in this example. As shown in Fig. 3, connection establishment is first performed between the portable terminal 1 and the wireless communication device 2 by an ignored process (#101). For example, the portable terminal 1 is placed on the wireless communication device 2 that is disposed at the access point around the entrance of the exhibition room (or the booth), and then the connection establishment is performed automatically. It is possible to structure such that an operation of a special key triggers the connection establishment.

After the connection establishment, the connection information is transmitted from the wireless communication device 2 (the connection information exchange portion 25) to the portable terminal 1 (the connection information exchange portion 15) (#102). The connection information includes server information including a DNS and a gateway, service information including a printer address, a mail address and a web address, cryptographic information (a key of cryptograph) and the like. There is a case where the connection information further includes an IP address and WINS for TCP/IP protocol and a net mask. In addition, it can include a password for authentication of the party on the other end. The processor 241 of the wireless communication management portion 24 of the wireless communication device 2 (see Fig. 1) reads this connection information out of the storage device 242 and gives the information to the connection information exchange portion 25.

At the portable terminal 1 side, the processor 141 of the wireless communication management portion 14 (see Fig. 1) makes the memory 143 store the connection information received by the connection information exchange portion 15, and registers the information in the nonvolatile storage device 142. The process up to this time is performed by the connection information exchange portions 15 and 25 of the contact method or the non-contact method such as the infrared communication.

After that, request for connection to the server 4 is transmitted from the portable terminal 1 to the wireless communication device 2 using the wireless communication interface 11 (#103). On this occasion, the wireless communication management portion 14 of the portable terminal 1 uses connection information including server information and service information that has been already obtained for selecting a desired service and the server 4 so as to perform encryption. Thus, a procedure for searching online a desired service can be omitted. For example, if the user of the portable terminal 1 wants to print detailed information about an exhibition, he or she designates a desired printer address.

The wireless communication device 2 receives connection request from the portable terminal 1 via the wireless communication interface 21, so that the connection establishment is performed by the short distance wireless communication between the portable terminal 1 and the wireless communication device 2 (#104). After that, the user of the portable terminal 1 connects to the network 3 via the wireless communication device 2, so as to obtain desired information from the server 4.

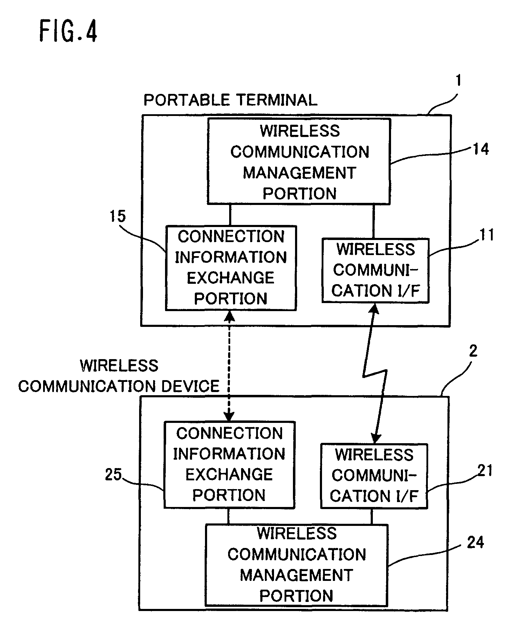

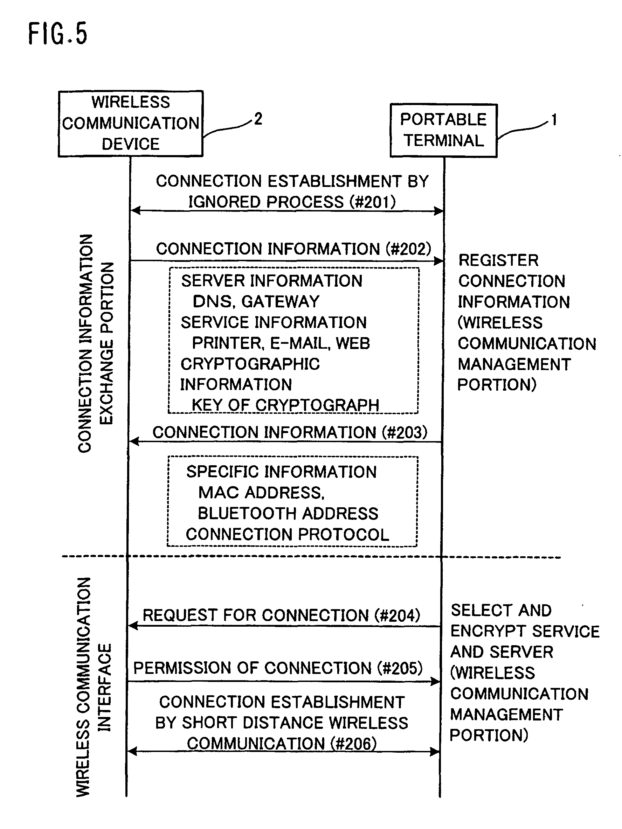

Next, an example where the exchange of connection information is performed bidirectionally between the portable terminal 1 and the wireless communication device 2 will be described with reference to Figs. 4 and 5.

Fig. 4 is a block diagram showing a second example by extracting a main part of the short distance wireless communication system shown in Fig. 1. Fig. 5 is an explanatory diagram of the second example about transmission and reception of information between a portable terminal and a wireless communication device.

As shown by a broken line with an arrow in Fig. 4, the connection information is transmitted and received bidirectionally between the connection information exchange portion 25 of the wireless communication device 2 and the connection information exchange portion 15 of the portable terminal 1 in this example. In Fig. 5, the connection establishment (#201) by an ignored process and transmission of the connection information from the wireless communication device 2 (the connection information exchange portion 25) to the portable terminal 1 (the connection information exchange portion 15) (#202) are performed in the same manner as the processes (#101 and #102) shown in Fig. 3. After that, transmission of the connection information from the portable terminal 1 to the wireless communication device 2 is performed in this example (#203). The connection information transmitted from the portable terminal 1 to the wireless communication device 2 includes specific information such as a MAC address of the portable terminal 1 and a "Bluetooth" address and information about a connection protocol.

After that, request for connection to the server 4 is transmitted from the portable terminal 1 to the wireless communication device 2 using the wireless communication interface 11 (#204) in the same manner as the process (#103) shown in Fig. 3. The wireless communication device 2 that received the connection request checks whether or not the connection is permissible in accordance with the connection information (the specific information) received from the portable terminal 1 prior to the connection establishment by the short distance wireless communication. The connection permission is sent to the portable terminal 1 only when it is decided that the connection is permissible. Then, the connection establishment by the short distance wireless communication is performed between the portable terminal 1 and the wireless communication device 2 (#206). Thus, the user of the portable terminal 1 can connect to the network 3 via the wireless communication device 2 so as to obtain desired information from the server 4. In this example, the wireless communication device 2 has received specific information such as a MAC address or a "Bluetooth" address of the portable terminal 1 and has registered the same in advance so as to check whether or not the connection is permissible by referring to the specific information when receiving the connection request. Therefore, security becomes higher than the case shown in Fig. 3.

The short distance wireless communication between the portable terminal 1 and the wireless communication device 2 will be further described as follows.

The portable terminal 1 performs the short distance wireless communication with the wireless communication device 2 by using connection information stored in the storage device 142, such as a MAC address that is unique to a LAN card for wireless LAN, a "Bluetooth" address for "Bluetooth", an IP address for the TCP/IP protocol, DNS, WINS, a net mask or a default gateway. In addition, some cases may require authentication information such as a password for authentication of the party on the other end or key information that is used for encryption of transmission and reception data.

The wireless communication management portion 14 reads the connection information out of the storage device 142 and transmits the information to the connection information exchange portion 25 of the wireless communication device 2 via the connection information exchange portion 15. The wireless communication device 2 records the connection information that is received by the connection information exchange portion 25 in the processor 241 temporarily. In addition, the obtained connection information is also stored in the storage device 242 so that the connection information is not erased when power is shut down. Among the connection information stored in the memory 243, the MAC address and the IP address are used by the processor 241 as data of the party on the other end in the case of wireless LAN, while the "Bluetooth" address is used as the party on the other end data in the case of "Bluetooth", so that connection of the physical layer of the network 3 is started. In addition, if the TCP/IP protocol is used for the connection, other setting information (a net mask, DNS, WINS, default gateway information) is set in the memory 243.

The portable terminal 1, which uses the wireless communication interface 11 so as to connect to the wireless communication device 2, requests a password for confirming the party on the other end from the wireless communication device 2 that is the party on the other end. The processor 241 of the wireless communication device 2 interprets the request, searches a corresponding password from the connection information that is stored in the memory 243. If the password is found, the processor 241 transmits the information to the portable terminal 1 via the wireless communication interface 21. If the corresponding password is not found, the display portion 12 is used for inquiring the user of the portable terminal 1. Thus, in accordance with the connection information that was obtained in advance via the connection information exchange portions 15 and 25, the wireless communication management portions 14 and 24 perform communication setting automatically, so the user is not required to do manual communication setting. In the same way, if there is an instruction of encryption from the portable terminal 1, the wireless communication device 2 searches corresponding cryptographic information from the connection information that is stored in the memory 243, and the processor 241 uses the cryptographic information (key information) for encrypting transmission data. Therefore, the user is not required to input key information that is used for the encryption.

In addition, the wireless network that is constituted by the wireless communication interfaces 11 and 21 after establishing connection by the short distance wireless communication and the network 3 to which the wireless communication device 2 connects via the network interface 26 can be connected to each other when the processor 241 performs a NAT function for rewriting a header of an IP packet.

Though the present invention is described above using examples and variations, the present invention is not limited to the above examples but can be embodied in various forms.

### INDUSTRIAL APPLICABILITY

As described above, according to the short distance wireless communication system using portable terminals and its wireless communication device of the present invention, prior to the short distance wireless communication, connection information that is necessary for establishing the connection is exchanged by the connection information exchange portion using communication means such as connection terminals or infrared communication (IrDA) that can provide relatively easy connection. When starting the short distance wireless communication, the connection information that was exchanged in advance is used for establishing the connection for the short distance wireless communication. Therefore, a user of the portable terminal is not required to do manual input of the connection information. In addition, even a user who has little knowledge about setting for the short distance wireless communication can easily connect to a network via the wireless communication device so as to obtain desired information from a server.

## Claims

1. A short distance wireless communication system comprising:
a wireless communication device for relaying communication that is connected to a server for providing information via a network; and
a portable terminal that can connect to the wireless communication device by short distance wireless communication for receiving information provided by the server, wherein
the wireless communication device includes
a network interface for connecting to the network,
a wireless communication interface for the short distance wireless communication with the portable terminal,
a connection information exchange portion for exchanging connection information for communication establishment with the portable terminal prior to the short distance wireless communication with the portable terminal, and
a wireless communication management portion for controlling the exchange process of the connection information by the connection information exchange portion and the communication establishment process with the portable terminal in accordance with the connection information, and
the portable terminal includes
a wireless communication interface for performing the short distance wireless communication with the wireless communication device,
a connection information exchange portion for exchanging the connection information for the communication establishment with the wireless communication device prior to the short distance wireless communication with the wireless communication device, and
a wireless communication management portion for controlling the exchange process of the connection information by the connection information exchange portion and the communication establishment process with the wireless communication device in accordance with the connection information.

2. The short distance wireless communication system according to claim 1, wherein the connection information is transmitted and received bidirectionally between the connection information exchange portion of the wireless communication device and the connection information exchange portion of the portable terminal.

3. The short distance wireless communication system according to claim 1, wherein the connection information is transmitted and received in one direction from the connection information exchange portion of the wireless communication device to the connection information exchange portion of the portable terminal.

4. The short distance wireless communication system according to claim 1, wherein the connection information exchange portion of the wireless communication device and the connection information exchange portion of the portable terminal have connection terminals that contact each other, and the connection information is transmitted and received by the contact between the connection terminals.

5. The short distance wireless communication system according to claim 1, wherein the connection information exchange portion of the wireless communication device and the connection information exchange portion of the portable terminal perform transmission and reception of the connection information by non-contact information transmission means like wireless communication, optical communication and optical reading.

6. The short distance wireless communication system according to claim 5, wherein the non-contact information transmission means have a directivity.

7. The short distance wireless communication system according to claim 1, wherein the connection information includes at least one of server information including DNS and a gateway, service information including a printer address, a mail address and a web address and cryptographic information.

8. The short distance wireless communication system according to claim 1, wherein the connection information further includes date information that indicates an expiration date of the connection information.

9. A wireless communication device that is connected to a server for providing information via a network and is disposed at an access point for relaying information provision service by the server to a portable terminal having a short distance wireless communication function, the device comprising:
a network interface for connecting to the network;
a wireless communication interface for the short distance wireless communication with the portable terminal;
a connection information exchange portion for exchanging connection information for communication establishment with the portable terminal prior to the short distance wireless communication with the portable terminal; and
a wireless communication management portion for controlling the exchange process of the connection information by the connection information exchange portion and the communication establishment process with the portable terminal in accordance with the connection information.

10. The wireless communication device according to claim 9, wherein the connection information exchange portion has a connection terminal for electric connection with the portable terminal, and transmission and reception of the connection information is performed by the connection terminal.

11. The wireless communication device according to claim 9, wherein the connection information exchange portion performs transmission and reception of the connection information by non-contact information transmission means like wireless communication, optical communication and optical reading.

12. The wireless communication device according to claim 9, wherein the non-contact information transmission means have a directivity.

13. The wireless communication device according to claim 9, wherein the connection information, which includes at least one of server information including DNS and a gateway, service information including a printer address, a mail address and a web address and cryptographic information, is transmitted to the portable terminal via the connection information exchange portion prior to the short distance wireless communication with the portable terminal.

14. The wireless communication device according to claim 9, wherein the connection information including information for specifying the portable terminal and a connection protocol is received from the portable terminal via the connection information exchange portion prior to the short distance wireless communication with the portable terminal.
